# EUROPÄISCHE PATENTSCHRIFT

(11) **EP 2 269 321 B1**
(45) Veröffentlichungstag und Bekanntmachung des Hinweises auf die Patenterteilung: **02.04.2014**
(21) Anmeldenummer: 08749703.8
(22) Anmeldetag: 24.04.2008
(51) Int. Cl.: H04B 3/54, H04L 12/721, H04L 12/803

(54) **VERFAHREN UND VORRICHTUNG ZUR DATENVERARBEITUNG SOWIE SYSTEM UMFASSEND DIE VORRICHTUNG**
METHOD AND DEVICE FOR DATA PROCESSING AND SYSTEM COMPRISING SAID DEVICE
PROCÉDÉ ET DISPOSITIF DE TRAITEMENT DE DONNÉES ET SYSTÈME CONTENANT CE DISPOSITIF

(43) Veröffentlichungstag der Anmeldung: 05.01.2011
(73) Patentinhaber: Siemens Aktiengesellschaft, 80333 München (DE)
(72) Erfinder: HOCHLEITNER, Kurt, A-1210 Wien (AT); KUSSYK, Jaroslaw, 1170 Wien (AT); LICHTNEKERT, Johann, A-1050 Wien (AT); SEILER, Andreas, A-1220 Wien (AT)
(74) Vertreter: Maier, Daniel Oliver
(86) Internationale Anmeldenummer: PCT/EP2008/054995
(87) Internationale Veröffentlichungsnummer: WO 2009/129854

(56) Entgegenhaltungen:
- US-A1- 2004 264 501
- HINDEN R ET AL: "Virtual Router Redundancy Protocol (VRRP); rfc3768.txt" IETF STANDARD, INTERNET ENGINEERING TASK FORCE, IETF, CH, 1. April 2004 (2004-04-01), XP015009548 ISSN: 0000-0003
- ABDELFATTEH HAIDINE ET AL: "Solving the generalized base station placement problem in the planning of Broadband Power Line Communications access networks" ACCESS NETWORKS&WORKSHOPS, 2007. ACCESSNETS '07. SECOND INTER NATIONAL CONFERENCE ON, IEEE, PI, 1. August 2007 (2007-08-01), Seiten 1-8, XP031212403 ISBN: 978-1-4244-1149-8

## Beschreibung

Die Erfindung betrifft ein Verfahren und eine Vorrichtung zur Datenverarbeitung sowie ein System umfassend eine derartige Vorrichtung.

In [1] ist ein Ansatz beschrieben, um sukzessive diverse Gebiete flächendeckend mittels zellularer Netzwerktopologien zu erschließen. In besagten Gebieten sind hierbei eine Vielzahl von Kommunikationsgeräten vorgesehen.

Ein Kommunikationsnetzwerk für Energieleitungen verarbeitet vorzugsweise Daten von Energieverbrauchszählern, diversen Sensoren, Lastschaltgeräten, Automätisierungsgeräten oder anderen Geräten. Diese Daten werden zwischen Knoten des Kommunikationsnetzwerks ausgetauscht, wobei beispielsweise eine Gruppe von Knoten zu einer Netzwerkzelle zusammengefasst sein kann und ein Knoten der Netzwerkzelle eine Funktion einer Zentralstation oder einer Basisstation wahrnimmt. Insbesondere können die Knoten der Netzwerkzelle mit der Basisstation kommunizieren bzw. sind dieser logisch zugeordnet. Die Basisstation verfügt über einen Anschluss an ein Backbone-Netzwerk anhand dessen eine Kommunikation der Basisstationen untereinander bzw. mit Netzwerkkomponenten des Backbone-Netzwerks ermöglicht wird.

Die Knoten einer Netzwerkzelle sind beispielsweise hierarchisch an die Basisstation gekoppelt, so dass jeder Knoten der Netzwerkzelle von der Basisstation mittels mindestens eines Übertragungsabschnitts bzw. Übertragungsschritts (auch bezeichnet als "Hop") erreicht werden kann. Gemäß dem hierarchischen Aufbau der Netzwerkzelle können Knoten über andere Knoten der Netzwerkzelle von der Basisstation erreicht werden (in diesem Fall sind mehrere Übertragungsabschnitte bzw. Übertragungsschritte nötig). Ein entsprechender Aufbau ist u.a. in US 2004/0264501 beschrieben.

Hierbei ist es von Nachteil, dass die Netzwerkzelle nur begrenzte Datenmengen verarbeiten und es daher zu unerwünschten Überlastsituationen kommen kann. Dies gilt umso mehr als es in Energienetzen häufig zu Unterbrechungen aufgrund von Umschaltungen bzw. Netzerweiterungen kommen und in solchen Fällen eine Verbindung der Knoten mit dem Backbone-Netzwerk ausfallen kann.

Die **Aufgabe** der Erfindung besteht darin, die vorstehend genannten Nachteile zu vermeiden und insbesondere einen Ansatz zu schaffen, der eine effiziente Nutzung eines Energienetzes erlaubt.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Datenverarbeitung in einem Netzwerk angegeben umfassend mindestens eine Netzwerkzelle mit mindestens zwei Basisstationen und mehreren Knoten, die mit den mindestens zwei Basisstationen verbunden und/oder assoziiert sind, bei dem anhand der mindestens zwei Basisstationen ein Datenfluss in der Netzwerkzelle geregelt wird.

Somit ist es möglich, dass in einer Netzwerkzelle effizient Daten an mindestens zwei Stellen zu einem Backbone-Netzwerk geleitet werden können. Dies ist umso vorteilhafter als im Falle einer defekten Basisstation die mindestens eine weitere Basisstation die Daten der defekten Basisstation verarbeiten kann. Auch ist es möglich, dass bei einer Unterbrechung einer Verbindung in der Netzwerkzelle einige Knoten zumindest vorübergehend auf die mindestens eine nähere Basisstation ausweichen, um eine Verbindung mit dem Backbone-Netzwerk zu gewährleisten.

Somit kann im Falle der Störung der Dienst in dem Netzwerk aufrechterhalten werden.

Bei dem Netzwerk handelt es sich vorzugsweise um ein Energienetz bzw. ein Energieversorgungsnetz(werk).

Hierbei sei angemerkt, dass es sich bei der Basisstation um einen Knoten handelt, der über einen Anschluss bzw. eine Anschlussmöglichkeit zu dem Backbone-Netzwerk verfügt. Ferner ist es eine Weiterbildung, dass jede Basisstation mit einem Backbone-Netzwerk verbunden ist oder über eine Anschlussmöglichkeit zu dem Backbone-Netzwerk, insbesondere über mindestens einen (weiteren) Knoten, verfügt.

Ein Knoten eignet sich vorteilhaft dazu, Daten an mindestens einen weiteren Knoten weiterzuleiten. Dieser mindestens eine weitere Knoten ist somit indirekt mit der Basisstation verbunden. Insbesondere kann ein Knoten mit der Basisstation über mehrere weitere Knoten verbunden sein.

Eine Netzwerkzelle kann logisch und/oder physikalisch separat von anderen Netzwerkzellen ausgeführt sein.

Insbesondere kann die Basisstation statisch oder beweglich ausgeführt sein.

Zumindest ein Teil der Routing-Funktionalität kann in den Basisstationen vorgesehen sein. Auch kann die Routing-Funktionalität auf mindestens einen Knoten der Netzwerkzelle verteilt sein; insbesondere können mehrere Knoten ggf. in Kombination mit der Basisstation ein Routing ermöglichen. Die Routing-Funktionalität kann weiterhin zumindest teilweise von dem Backbone-Netzwerk oder mindestens einer Komponente des Backbone-Netzwerks wahrgenommen werden.

Insbesondere kommunizieren die mindestens zwei Basisstationen der Netzwerkzelle direkt bzw. über mindestens einen Knoten des Netzwerks oder über das Backbone-Netzwerk miteinander, um eine geeignete und effiziente Aufteilung des Routings von bzw. für die Knoten der Netzwerkzelle zu ermöglichen.

Auch ist es eine Weiterbildung, dass der Datenfluss in der Netzwerkzelle von einem Teil der mindestens zwei Basisstationen oder von allen Basisstationen der Netzwerkzelle geregelt wird.

Im Rahmen einer zusätzlichen Weiterbildung wird der Datenfluss in der Netzwerkzelle von dem bzw. über das Backbone-Netzwerk geregelt.

Eine nächste Weiterbildung besteht darin, dass die Basisstationen abwechselnd aktiviert werden. Insbesondere können Gruppen von Basisstationen abwechselnd oder der Reihe nach (ggf. zeitlich überlappend) aktiv sein.

Insbesondere können die mehreren Basisstationen abwechselnd aktiv sein, um so in einer Art Multiplexbetrieb an verschiedenen Stellen der Netzwerkzelle Daten mit dem Backbone-Netzwerk und den mittelbar bzw. unmittelbar den Basisstationen zugeordneten Knoten auszutauschen.

Eine Ausgestaltung ist es, dass eine Vielzahl von Netzwerkzellen in dem Netzwerk vorgesehen sind.

Eine alternative Ausführungsform besteht darin, dass Daten über einen Knoten an mindestens einen weiteren Knoten, der mit dem mindestens einen Knoten verbunden ist, weitergeleitet werden.

Eine nächste Ausgestaltung ist es, dass der Knoten direkt mit der Basisstation oder indirekt über mindestens einen weiteren Knoten mit der mindestens einen Basisstation verbunden ist.

Auch ist es eine Ausgestaltung, dass eine Datenlast in der Netzwerkzelle verteilt wird.

Eine zusätzliche Ausgestaltung ist es, dass das Netzwerk ein Gleichwellennetz umfasst.

Als Netzwerke eignen sich drahtgebundene sowie drahtlose Netzwerke, insbesondere Kombinationen derselben. Insbesondere kann das Netzwerk ein sogenanntes Gleichwellennetz umfassen.

Bei der Anbindung einer großen Anzahl von Energieverbrauchszählern, Sensoren, Lastschaltgeräten, Automatisierungsgeräten und/oder anderen Geräten bzw. Vorrichtungen an eine oder mehrere Zentrale(n) bzw. Basisstation(en) können drahtlose oder leitungsgebundene Informationsübertragungssysteme eingesetzt werden, die insbesondere ein Gleichwellennetz(werk) (engl.: "single frequency network") umfassen.

In einem solchen Gleichwellennetz wird eine Dateneinheit oder ein Datentelegramm (auch bezeichnet als "Telegramm") von einem oder von mehreren Absendern in alle Richtungen zeitgleich und auf den gleichen Frequenzen übertragen. Empfängt ein Knoten (auch bezeichnet als Station oder Netzwerkstation) in dem Gleichwellennetz die Dateneinheit, wird diese entsprechend und bei Bedarf in mehreren Wiederaussendungsschritten bzw. -wellen über andere Stationen oder Knoten einem Ziel zugeführt.

Ein Vorteil der Gleichwellennetze ist es, dass das Routing (z.B. zum Zecke der Wegesuche oder Wartung) vereinfacht wird: So ermöglicht das Gleichwellennetz einen Übertragungsvorgang von einer Quelle (Quellstation) zu einem Ziel (Zielstation) - ggf. über mehrere Übertragungsabschnitte (auch bezeichnet als Hops) bzw. Zwischenstationen - lediglich durch eine Angabe der Adresse der Zielstation(en) und durch Angabe der Anzahl der Wiederaussendungen.

Hierbei ist es nicht entscheidend, welche Netzwerkstationen und/oder Netzwerknoten in welchen Teilen der Übertragungsstrecke(nabschnitte) eine Dateneinheit in Richtung Ziel weiterleiten. Dies ergibt sich aus dem Übertragungskanal sowie aus verschiedenen Konstellationen des Gleichwellennetzes.

Der vorliegende Ansatz ist anwendbar bei leitungsgebundenen oder drahtlosen Netzen, insbesondere bei Gleichwellennetzen, z.B. unter Ausnutzung einer Gleichwellenübertragungstechnik (Gleichwellenfunk bzw. Gleichwellenrelaisfunk).

Das hierin bezeichnete Gleichwellennetz umfasst mehrere Möglichkeiten zur Ausbreitung von Nachrichten bzw. Dateneinheiten zwischen mehreren Knoten. Mindestens ein Knoten sendet eine Dateneinheit zu mindestens einem weiteren Knoten. Demgemäß können mehrere Sender vorgesehen sein, die jeweils eine Dateneinheit zu einem oder mehreren Empfängern senden. Derartige mehrere Sender senden im wesentlichen gleichzeitig, d.h. insbesondere unter Einhaltung vorgegebener bzw. vorgebbarer zeitlicher Toleranzen, die Dateneinheit zu mindestens einem Empfänger. Hierbei sei angemerkt, dass die Sender nicht aufwändig miteinander synchronisiert werden müssen.

Weiterhin wird zur Lösung der vorstehend genannten Aufgabe eine Vorrichtung angegeben umfassend eine Prozessoreinheit und/oder eine zumindest teilweise festverdrahtete oder logische Schaltungsanordnung, die derart eingerichtet ist, dass das Verfahren wie hierin beschrieben durchführbar ist.

Besagte Prozessoreinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen. Eine solche Prozessoreinheit kann insbesondere in einem Kommunikationsgerät vorgesehen sein, das insbesondere einen Sender, Empfänger (Receiver) oder einen Transceiver aufweist.

Weiterhin kann eine festverdrahtete oder logische Schaltungseinheit, z.B. ein FPGA oder ein ASIC oder eine sonstige integrierte Schaltung vorgesehen sein. Insbesondere können elektronische, elektromagnetische, akustische oder sonstige Elemente vorgesehen sein, um unterschiedliche Signale zu erkennen und/oder zu verarbeiten.

Insbesondere kann die Vorrichtung somit eine Einheit zur parallelen Verarbeitung von Signalen und/oder eine Einheit zur seriellen Verarbeitung von Signalen umfassen.

Die Vorrichtung kann umfassen oder ausgeführt sein als: Ein Messgerät, ein Diagnosegerät, ein Zähler, ein Informationsgewinnungsgerät, ein Regelungsgerät, ein Peilgerät und/oder ein entsprechendes System.

Die Vorrichtung kann in der Energietechnik eingesetzt werden.

Es ist möglich, dass das Signal unterschiedliche physikalische Größen umfasst:
- eine elektrische Größe,
- eine elektromechanische Größe,
- eine elektromagnetische Größe,
- eine akustische Größe,
- eine thermische Größe,
- eine mechanische (insbesondere eine hydraulische oder pneumatische) Größe,
- eine chemische Größe,
- eine optische Größe.

Auch Kombinationen aus den vorgenannten Größen sind als Signal(e) möglich.

Es ist eine Weiterbildung, dass die Vorrichtung ein Kommunikationsgerät ist, wobei das Kommunikationsgerät mit einem weiteren Kommunikationsgerät Signale über eine Kommunikationsverbindung, die zumindest teilweise ein Stromnetz umfasst, austauscht.

Eine andere Weiterbildung ist es, dass das Kommunikationsgerät mit einem Knoten des Netzwerks assoziiert ist oder einem solchen Knoten des Netzwerks entspricht.

Weiterhin wird zur Lösung der Aufgabe ein System angegeben umfassend eine Vorrichtung wie hierin beschrieben.

Ausführungsbeispiele der Erfindung werden nachfolgend anhand der Zeichnung dargestellt und erläutert.

Es zeigt:

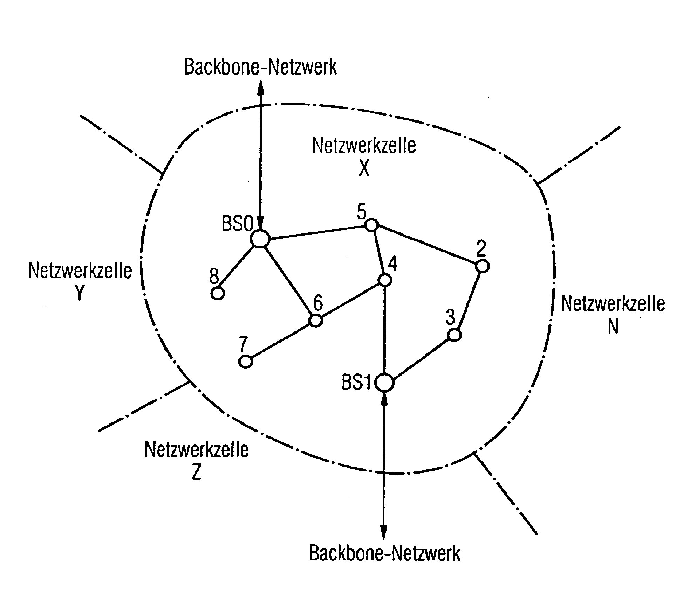

- Fig.1: eine Netzwerkzelle umfassend zwei Basisstation mit jeweils einer Anbindung an ein Backbone-Netzwerk sowie mehrere Knoten.

Der hier vorgestellte Ansatz erlaubt einen effizienten Betrieb einer Netzwerkzelle mit mehreren Basisstationen zur Reduktion einer Überlast und/oder zur Lastverteilung.

In einer Netzwerkzelle eines zellularen Netzwerks sind insbesondere mindestens zwei gleichwertige Basisstationen vorgesehen bzw. angeordnet, die jeweils direkt oder indirekt über eine Verbindung zu einem übergeordneten Backbone-Netzwerk verfügen können.

In einem Normalbetrieb ist zumindest eine der Basisstationen aktiv, während die anderen Basisstationen in der Netzwerkzelle als normale Knoten agieren und Datenpakete bzw. Dateneinheiten an andere Basisstationen und/oder Knoten weiterleiten.

Bei Bedarf (z.B. für einen Datenflussausgleich oder für eine Erhöhung des Datendurchsatzes) kann ein Teil der anderen Basisstationen koordiniert mit weiteren Basisstationen abwechselnd oder zeitlich überlappend oder parallel aktiviert sein bzw. werden, während die weiteren Basisstationen in der Zelle als normale Knoten agieren und insbesondere die Datenpakete an andere Knoten weiterleiten.

Eine Koordination der Basisstationen kann nach einer festen Regel oder Prozedur erfolgen, die vorzugsweise den Basisstationen zuvor bekannt gemacht wurde. Alternativ oder zusätzlich hierzu kann die Koordination zwischen Basisstationen und Knoten untereinander und/oder über das Backbone-Netzwerk und/oder durch eine besondere Basisstation oder anhand eines besonderen Knotens erfolgen.

Die Kommunikation zwischen den Netzwerkstation zum Zweck der Koordination kann entweder direkt oder indirekt über weitere Knoten bzw. Basisstationen oder über das Backbone-Netzwerk durchgeführt werden.

Die Basisstationen und/oder Knoten, die über eine Verbindung zu dem Backbone-Netzwerk verfügen, können in der Netzwerkzelle nach verschiedenen Gesichtspunkten angeordnet sein bzw. platziert werden. Hierbei können die folgenden Kriterien Anwendung finden bzw. kann eine Optimierung hinsichtlich der folgenden Kriterien erfolgen:
- Erreichbarkeit der Knoten;
- Verfügbarkeit der Kommunikation bei diversen Veränderungen des Kommunikationsmediums in der Netzwerkzelle (z.B. bei Netzumschaltungen o.ä.).

Die Basisstationen können beispielweise in einer Netzwerkzelle räumlich regelmäßig oder unregelmäßig verteilt angeordnet sein. Hierdurch kann sichergestellt werden, dass möglichst viele Knoten der Zelle gegebenenfalls über mehrere Hops und/oder in möglichst kurzer Zeit (mit einer geringen Menge an Hops) eine Basisstation und/oder ein Backbone-Netzwerk erreichen.

**Fig.1** zeigt eine Netzwerkzelle X in einem Verbund mit weiteren benachbarten Netzwerkzellen N, Y und Z. Die Netzwerkzelle X umfasst eine Basisstation BS0 und eine Basisstation BS1 sowie Knoten 2 bis 8.

Die Basisstation BS0 ist mit den Knoten 5, 6 und 8 verbunden und der Knoten 6 ist weiter mit dem Knoten 7 sowie mit dem Knoten 4 verbunden. Der Knoten 5 ist weiter mit dem Knoten 4 und mit dem Knoten 2 verbunden und der Knoten 2 ist über den Knoten 3 mit der Basisstation BS1 verbunden. Der Knoten 4 ist zusätzlich mit der Basisstation BS1 verbunden.

Sowohl die Basisstation BS0 als auch die Basisstation BS1 weisen jeweils eine Verbindung zu einem Backbone-Netzwerk auf.

Somit ist die Netzwerkzelle X über die beiden Basisstationen BS0 und BS1 mit dem Backbone-Netzwerk verbunden. Entsprechend können sich die Basisstationen die Dateneinheiten von den Knoten zu dem Backbone-Netzwerk und umgekehrt so aufteilen, dass Engpässe vermieden werden. Zusätzlich kann die jeweils andere Basisstation bei Ausfall einer Basisstation deren Knoten zumindest vorübergehend (oder dauerhaft) versorgen. Auch ist es möglich, dass bei Ausfall einer Verbindung in der Netzwerkzelle X die Zuordnungen der Knoten zu den Basisstationen (z.B. vorübergehend) verändert werden.

Im Beispiel gemäß Fig.1 wäre eine Zuordnungsmöglichkeit (bspw. bei gleicher Verbindungsqualität und gleichem Verkehrsaufkommen) abhängig von der Anzahl der Übertragungsabschnitte (Hops) zu treffen. Somit ergibt sich eine Aufteilung der Knoten zu Basisstationen gemäß der folgenden Tabelle:

| Übertragungsabschnitte | Basisstation BS0 | Basisstation BS1 |
|---|---|---|
| Hop 1 | Knoten 5, 6, 8 | Knoten 3, 4 |
| Hop 2 | Knoten 7 | Knoten 2 |

Beispielsweise sind zwei Übertragungsschritte bzw. Hops nötig, um den Knoten 7 über die Basisstation BS0 zu erreichen oder um den Knoten 2 über die Basisstation BS1 zu erreichen.

Fällt beispielsweise die Verbindung zwischen der Basisstation BS0 und dem Knoten 5 aus, so ergibt sich die folgende Routingtabelle:

| Übertragungsabschnitte | Basisstation BS0 | Basisstation BS1 |
|---|---|---|
| Hop 1 | Knoten 6, 8 | Knoten 3, 4 |
| Hop 2 | Knoten 7 | Knoten 5, 2 |

Somit ist der Knoten 5 jetzt nicht mehr innerhalb eines Hops von der Basisstation BS0 aus erreichbar, sondern innerhalb zweier Hops von der Basisstation BS1 (zum Vergleich: Bei unterbrochener Verbindung zwischen der Basisstation BS0 und dem Knoten 5 würden von der Basisstation BS0 drei Hops benötigt (über die Knoten 6 und 4), um den Knoten 5 zu erreichen).

Somit wird effektiv insbesondere in Überlastsituationen oder bei unterbrochenen oder defekten Verbindungen ein Datenflussausgleich erreicht anhand mehrerer aktiver Basisstationen in der Netzwerkzelle.

Sind mehrere Basisstationen abwechselnd oder gleichzeitig in einer Netzwerkzelle aktiv, so koordinieren diese sich vorzugsweise untereinander oder werden zentral, z.B. über das Backbone-Netzwerk, koordiniert.

### Weitere Vorteile:

Der hier vorgestellte Ansatz ermöglicht eine wesentliche Erhöhung des Datendurchsatzes und der Verfügbarkeit in einer Netzwerkzelle durch eine (verteilte) Platzierung mehrerer koordinierter Basisstationen.

Eine automatische Koordination der Basisstationen in einer Netzwerkzelle ermöglicht auch bei einer Änderung einer Topologie der Netzwerkzelle oder bei Inbetriebnahme zusätzlicher Basisstationen höhere Datendurchsätze ohne dass manuelle Eingriffe oder eine erneute Netzplanung durch den Netzwerkbetreiber benötigt würden.

Auch lässt sich durch einen sich abwechselnden oder parallelen Betrieb mehrerer koordinierter Basisstationen der Datenfluss zwischen den Netzwerkstationen und dem Backbone-Netzwerk besser steuern bzw. ausgleichen (z.B. bei einer Überlastung einer aktiven Basisstation). Infolgedessen können Reaktionszeiten des zellularen Netzwerks deutlich verringert werden.

Durch die Eigenschaft des Datenflussausgleichs ist es möglich, eine von den benachbarten Netzwerkzellen weitgehend unabhängige Skalierbarkeit innerhalb einer Netzwerkzelle zu erreichen. Dies ist insbesondere von Vorteil, wenn einzelne (benachbarte) Netzwerkzellen ausgebaut werden sollen.

Auch die Weiterleitung von Datenpaketen durch die inaktiven Basisstationen (die als Knoten der Netzwerkzelle fungieren) verbessert eine Erreichbarkeit der Knoten.

### Quelle (n) :

[1] Haidine, A.; Lehnert, R.: "Analysis of the Channel Allocation Problem in Broadband Power Line Communications Access Networks", Proceedings of the 2007 IEEE International Symposium on Power-Line Communications and Its Applications, 26th - 28th March 2007, Pisa, Italy, 2007, pp. 192-197.

## Patentansprüche

1. Verfahren zur Datenverarbeitung in einem Netzwerk, umfassend mindestens eine Netzwerkzelle mit mindestens zwei Basisstationen und mehreren Knoten, die mit den mindestens zwei Basisstationen direkt oder indirekt über mindestens einen weiteren Knoten verbunden und/oder assoziiert sind und wobei das Netzwerk ein Energienetz umfasst, wobei
die mindestens zwei Basisstationen jeweils über eine Verbindung zu einem übergeordneten Backbone-Netzwerk verfügen, und wobei
in einem Normalbetrieb zumindest eine der Basisstationen aktiv ist, und wobei
in diesem Normalbetrieb die weiteren Basisstationen als Knoten agieren, welche Dateneinheiten an andere Basisstationen oder Knoten weiterleiten, und wobei jeder Knoten in Abhängigkeit von der Anzahl der Übertragungsabschnitte einer aktiven Basisstation zugeordnet ist, und wobei
eine Routing-Funktionalität vorgesehen ist, die mittels der mindestens zwei Basisstationen den Datenfluss in der Netzwerkzelle regelt und
eine Datenlast in der Netzwerkzelle verteilt, wobei zur Erhöhung des Datendurchsatzes ein Teil der inaktiven Basisstationen parallel zu den aktiven Basisstationen aktiviert wird.

2. Verfahren nach Anspruch 1, bei dem der Datenfluss in der Netzwerkzelle von einem Teil der mindestens zwei Basisstationen oder von allen Basisstationen der Netzwerkzelle geregelt wird.

3. Verfahren nach einem der vorhergehenden Ansprüche, bei dem jede Basisstation mit einem Backbone-Netzwerk verbunden ist.

4. Verfahren nach Anspruch 3, bei dem der Datenfluss in der Netzwerkzelle von einer in dem Backbone-Netzwerk angeordneten Routing-Funktionalität geregelt wird.

5. Verfahren nach einem der vorhergehenden Ansprüche, bei dem die Basisstationen abwechselnd aktiviert werden.

6. Verfahren nach einem der vorhergehenden Ansprüche, bei dem eine Vielzahl von Netzwerkzellen in dem Netzwerk vorgesehen sind.

7. Verfahren nach einem der vorhergehenden Ansprüche, bei dem Daten über einen Knoten an mindestens einen weiteren Knoten, der mit dem mindestens einen Knoten verbunden ist, weitergeleitet werden.

8. Verfahren nach einem der vorhergehenden Ansprüche, bei dem das Netzwerk ein Gleichwellennetz umfasst.

9. Vorrichtung umfassend eine Prozessoreinheit und/oder eine zumindest teilweise festverdrahtete oder logische Schaltungsanordnung, die derart eingerichtet ist, dass das Verfahren nach einem der vorhergehenden Ansprüche durchführbar ist.

10. Vorrichtung nach Anspruch 9, bei der die Vorrichtung ein Kommunikationsgerät, insbesondere ein Knoten eines Netzwerks ist.

11. Vorrichtung nach einem der Ansprüche 9 oder 10, bei dem das Kommunikationsgerät mit einem weiteren Kommunikationsgerät Signale über eine Kommunikationsverbindung, die zumindest teilweise ein Stromnetz umfasst, austauscht.

12. System umfassend eine Vorrichtung gemäß einem der Ansprüche 9 bis 11.

## Claims

1. Method for data processing in a network, including at least one network cell with at least two base stations and a number of nodes, which are connected and/or associated directly or indirectly with the at least two base stations by way of at least one further node, and wherein the network includes an energy network, wherein
the at least two base stations each have a connection to a superordinate backbone network, and wherein
during normal operation at least one of the base stations is active and wherein
during this normal operation the further base stations operate as nodes, which forward data units to other base stations or nodes, and wherein each node is assigned to an active base station as a function of the number of transmission sections, and wherein
a routing functionality is provided, which regulates the data flow in the network cell by means of the at least two base stations and distributes a data load in the network cell, wherein in order to increase the data throughput, a part of the inactive base stations is activated in parallel with the active base stations.

2. Method according to claim 1, in which the data flow in the network cell is regulated by a part of the at least two base stations or by all base stations of the network cell.

3. Method according to one of the preceding claims, in which each base station is connected to a backbone network.

4. Method according to claim 3, in which the data flow in the network cell is regulated by a routing functionality arranged in the backbone network.

5. Method according to one of the preceding claims, in which the base stations are activated alternately.

6. Method according to one of the preceding claims, in which a plurality of network cells are provided in the network.

7. Method according to one of the preceding claims, in which data is forwarded via a node to at least one further node, which is connected to the at least one node.

8. Method according to one of the preceding claims, in which the network includes a synchronized network.

9. Apparatus including a processor unit and/or an at least partly hardwired or logical circuit arrangement, which is configured so that the method can be implemented as claimed in one of the preceding claims.

10. Apparatus according to claim 9, in which the apparatus is a communication device, in particular a node of a network.

11. Apparatus according to one of claims 9 or 10, in which the communication device exchanges signals with a further communication device by way of a communication link, which at least partly includes a power network.

12. System including an apparatus according to one of claims 9 to 11.

## Revendications

1. Procédé de traitement de données dans un réseau, comprenant au moins une cellule de réseau avec au moins deux stations de base et plusieurs noeuds qui sont reliés et/ou associés aux au moins deux stations de base, de manière directe ou indirecte, par le biais d'au moins un autre noeud, et le réseau comprenant un réseau d'énergie, les au moins deux stations de base disposant à chaque fois d'une liaison vers un réseau dorsal,
et au moins une des stations de base étant active pendant le fonctionnement normal,
et les autres stations de base agissant, pendant ce fonctionnement normal, comme des noeuds qui transmettent des unités de données à d'autres stations de base ou noeuds,
et chaque noeud étant associé à une station de base active en fonction du nombre de tronçons de transmission,
et une fonctionnalité de routage qui régule le flux de données dans la cellule de réseau au moyen des au moins deux stations de base et qui distribue une charge de données dans la cellule de réseau étant prévue,
une partie des stations de base inactives étant activée parallèlement aux stations de base actives pour augmenter le débit de données.

2. Procédé selon la revendication 1, dans lequel le flux de données dans la cellule de réseau est régulé par une partie des au moins deux stations de base ou par toutes les stations de base de la cellule de réseau.

3. Procédé selon l'une des revendications précédentes, dans lequel chaque station de base est reliée à un réseau dorsal.

4. Procédé selon la revendication 3, dans lequel le flux de données dans la cellule de réseau est régulé par une fonctionnalité de routage située dans le réseau dorsal.

5. Procédé selon l'une des revendications précédentes, dans lequel les stations de base sont activées en alternance.

6. Procédé selon l'une des revendications précédentes, dans lequel une pluralité de cellules de réseau sont prévues dans le réseau.

7. Procédé selon l'une des revendications précédentes, dans lequel des données sont transmises par le biais d'un noeud à au moins un autre noeud qui est relié à l'au moins un noeud.

8. Procédé selon l'une des revendications précédentes, dans lequel le réseau comprend un réseau de fréquence commune.

9. Dispositif comprenant une unité de processeur et/ou un circuit au moins partiellement câblé ou logique qui est adapté pour que le procédé selon l'une des revendications précédentes puisse être exécuté.

10. Dispositif selon la revendication 9, dans lequel le dispositif est un appareil de communication, notamment un noeud d'un réseau.

11. Dispositif selon l'une des revendications 9 ou 10, dans lequel l'appareil de communication échange des signaux avec un autre appareil de communication par le biais d'une liaison de communication qui comprend, au moins partiellement, un réseau électrique.

12. Système comprenant un dispositif selon l'une des revendications 9 à 11.
